# EUROPEAN PATENT APPLICATION

(11) **EP 2 299 151 A2**
(43) Date of publication of application: **23.03.2011**
(21) Application number: 10251495.7
(22) Date of filing: 25.08.2010
(51) Int. Cl.: F16K 1/22

(54) **Check valve counterbalanced by flow to control opening and closing speeds**

(30) Priority: 11.09.2009 US 557820
(71) Applicant: Hamilton Sundstrand Corporation, Windsor Locks, CT 06096-1010 (US)
(72) Inventor: Roberg, Kevin Arthur, Norwich Connecticut 06360 (US)
(74) Representative: Tomlinson, Kerry John

(57) **Abstract**

A check valve (20) has a valve seat (41,43) defining an inner peripheral bore. A valve disc (26) is positioned within said inner peripheral bore, and mounted for pivotal movement about a hinge axis (28). A first central plane (C) separates the valve disc along a diameter, and a second central plane (P) divides the valve disc along a thickness. The hinge axis is offset from both of the central planes.

## Description

### BACKGROUND OF THE INVENTION

This application relates to a check valve which pivots about an axis which is offset from a center of the check valve disc in two directions.

Check valves are known, and utilized in many fluid flow applications. Essentially, a check valve allows flow of a fluid in one direction, but is forced to a sealing position if flow moves in the opposed direction.

In one known type of check valve, a disc pivots about an axis, from a first sealing position at which the disc seats on a valve seat, and to an open position. If such a disc valve pivots about an axis which extends through a center of the disc, then the fluid forces acting on the disc to open or close the disc will be balanced. The speed of movement to the open position can thus only be controlled by the force of the fluid.

It has been proposed to move the hinge axis off of the center line of the disc. In this manner, fluid forces acting on the disc on opposed sides of the hinge axis are unequal, and thus the fluid forces on the two sides of the axis can be controlled to control the opening and closing speed by selecting the amount of offset.

Still, there are deficiencies in the proposed check valve.

Various other offset angled valves are known, and have been used in particular in butterfly valves. Butterfly valves are typically driven by a motor, and thus, the challenges mentioned above with regard to a check valve are not as applicable.

### SUMMARY OF THE INVENTION

A check valve has a valve seat defining an inner peripheral bore. A valve disc is positioned within said inner peripheral bore, and mounted for pivotal movement about a hinge axis. A first central plane separates the valve disc along a diameter, and a second central plane dividing the valve disc along a thickness. The hinge axis is offset from both of the central planes.

These and other features of the present invention can be best understood from the following specification and drawings, the following of which is a brief description.

### BRIEF DESCRIPTION OF THE DRAWINGS

Figure 1 is a cross sectional view through a first check valve embodiment.
Figure 2 shows the Figure 1 check valve in an open position.
Figure 3 is a perspective view of a valve disc according to this invention.
Figure 4 is a cross-sectional view showing yet another feature.

### DETAILED DESCRIPTION OF THE PREFERRED EMBODIMENT

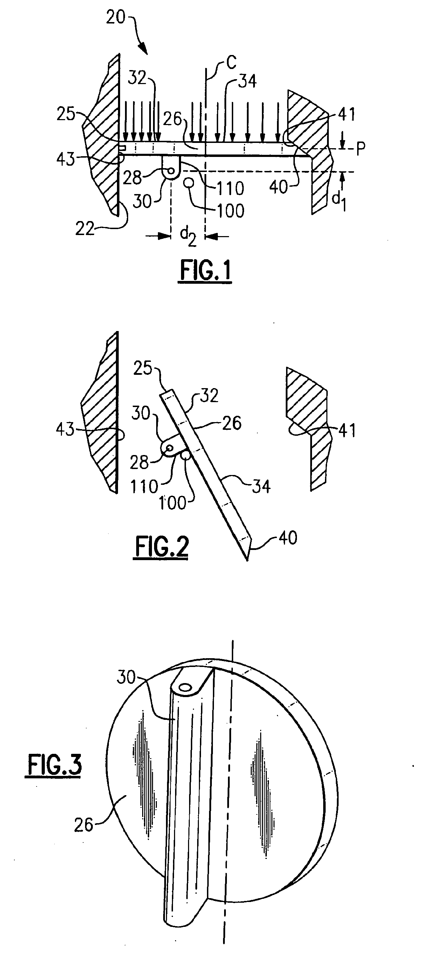

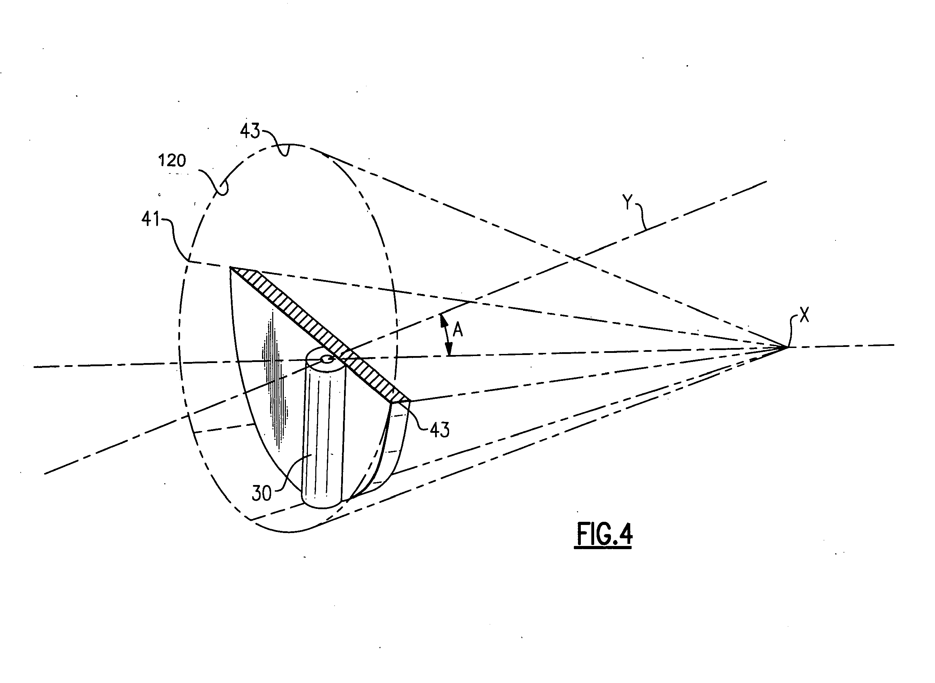

A check valve 20 is illustrated in Figure 1 for being mounted within a pipe or conduit 22. As illustrated in this Figure, a valve seat within the conduit 22 has an angled portion 41, and a cylindrical portion 43. The entire surface of the valve seat, beyond these two singular points will be best understood from Figure 4. A valve disc 26 has a surface 40 mating with the angled point 41, and a cylindrical portion 25.

The valve disc 26 pivots about a hinge axis 28 mounted within an ear 30 for defining the axis 28. As can be appreciated, a central plane P of the disc 32, defined through a thickness, is offset from the hinge axis 28 by a distance d1. As can also be seen in Figure 1, the hinge axis 28 is offset from a center plane C, defined by a diameter, of the valve disc 26 by a second distance d2. The d2 offset provides the benefit of allowing the fluid flow to be controlled to control the opening and closing speed. As can be appreciated from Figure 1, there will be greater valve force to the right-hand side (area 34) of the hinge axis 28 as illustrated in this Figure than to the left (area 32), and this will allow the speed of the valve opening to be controlled. That is, by selecting a desired offset d2, the speed of opening of the valve at any given pressure of fluid expected to pass through the conduit 22 can be controlled.

The offset d1 moves the hinge axis away from the sealing seal as the hinge pin will increase the difficulty of providing sealing.

As shown in Figure 2, a stop 100 will stop opening movement of the valve disc 26. In this stopped position, the valve disc will be held against the stop.

As can appreciated, the stop pin 100 is positioned such that a flat face 110 on the ear 30 contacts the stop pin to prevent further movement of the valve disc 32. This will avoid transmitting the loads through stress concentrations in the valve disc.

As can be appreciated from Figure 4, the valve seat surface 120 is defined by a conical surface which is centered about an axis X. The axis X is offset from a center axis Y of the duct 22 by an angle A. The angle A may be between 20° and 30°. As can be appreciated from Figure 4, the angled surface 43 is positioned on one side of the valve seat 120, while at a diametrically opposed location is the angled surface 41. The angled surface 41 is at an angle equal to angle A. Between points 43 and 41, in both circumferential directions, the angle of the valve seat increases progressively and at a constant rate from the cylindrical surface 43 to the angle A at 41.

Although an embodiment of this invention have been disclosed, a worker of ordinary skill in this art would recognize that certain modifications may come within the scope of this invention. For that reason, the following claims should be studied to determine the true scope and content of this invention.

## Claims

1. A check valve (20) comprising:
a valve seat (41,43) defining an inner peripheral bore;
a valve disc (26) positioned within said inner peripheral bore, and said valve disc being mounted for pivotal movement about a hinge axis (28), a first central plane (C) separating the valve disc along a diameter, and a second central plane (P) dividing the valve disc along a thickness; and
said hinge axis being offset from both of said central planes.

2. The check valve as set forth in claim 1, wherein said hinge axis is mounted within an ear (30) extending away from a rear face of said valve disc.

3. The check valve as set forth in claim 2, wherein a stop pin (100) is positioned intermediate said hinge axis and said first central plane.

4. The check valve as set forth in claim 3, wherein a side (110) of said ear contacts said stop pin to stop pivoting movement of said valve disc.

5. The check valve as set forth in claim 1, 2, 3 or 4, wherein a portion (40) of an outer peripheral surface of said valve disc is formed at an angle which is non-perpendicular and non-parallel to said central planes, and said valve seat having a mating angled surface (41).

6. The check valve as set forth in claim 5, wherein said portion of said valve seat is defined by a conical surface centered on a first axis (X), and said valve seat being associated with a cylindrical duct defining a second axis (Y), said first axis being offset from said second axis by an angle (A), and wherein at one point (41) said valve seat defines an angled surface equal to angle (A), and at a diametrically opposed point, said valve seat being cylindrical about said second axis, with said valve seat being defined at an angle that changes from said cylindrical surface to said one point in both circumferential directions.

7. The check valve as set forth in claim 6, wherein the angle of said valve seat increases geometrically from said cylindrical portion to said portion angled at the angle (A).

8. The check valve as set forth in claim 6 or 7, wherein said angle (A) is between 20° and 30°.
